# EUROPEAN PATENT APPLICATION

(11) **EP 2 938 156 A1**
(43) Date of publication of application: **28.10.2015**
(21) Application number: 13882598.9
(22) Date of filing: 18.11.2013
(51) Int. Cl.: H04W 76/02

(54) **METHOD AND DEVICE FOR ESTABLISHING CONVENIENT WIRELESS CONNECTION**

(30) Priority: 14.08.2013 CN 201310353679
(71) Applicant: ZTE Corporation, Shenzhen, Guangdong 518057 (CN)
(72) Inventor: ZHOU, Ming, Shenzhen Guangdong 518057 (CN)
(74) Representative: Bongiovanni, Simone
(86) International application number: PCT/CN2013/087345
(87) International publication number: WO 2014/169641

(57) **Abstract**

The present invention relates to a wireless communication network. Provided are a method and device for establishing a convenient wireless connection, the method including: configuring a first wireless access device to have a wireless station function; configuring a second wireless access device to have a wireless access point function; the first wireless access device discovering the second wireless access device by scanning wireless access points; the second wireless access device discovering the first wireless access device by scanning wireless stations; after having discovered each other, the first wireless access device and the second wireless access device establishing a wireless connection through negotiation, and after connection establishment, respectively functioning as wireless access points so as to establish a wireless local area network (WLAN) easily accessible by a large number of users. The solution simplifies network interconnection and optimizes the wirelessly connected local area network.

## Description

### Technical Field

The present invention relates to the wireless communication network, and in particular, to convenient networking and applications of a wireless local area network (WLAN). The present invention provides a method and a relevant device for rapidly and conveniently establishing a wireless connection of a secure WLAN.

### Background

With the popularization of the devices supporting the WLAN function and the maturing of the wireless technologies, more and more users contact and use the WLAN, and now it is very popular to use the WLAN in business areas, and the devices having the WLAN function used in places such as homes of users are also gradually popularized.

In a traditional manner, when a user newly establishes a wireless network, he or she must manually set a network name Service Set Identifier (SSID) and a secure key at a wireless access point (AP), and then when a station (STA) accesses, the AP side performs security check by authenticating the key. In the entire process, it is required that the user has the basic knowledge of the WiFi device and the capability of modifying necessary configurations. Specifically, in this process, a common user needs to know what is the SSID, AP and STA, and needs to know various types of encryption manners and configuration methods, which are very difficult for the users to understand and use, so that the common users feel that the WLAN networking process is very complex. In order to conveniently establish a WLAN and securely add new network application devices to the WLAN, the WiFi Alliance develops a WiFi Protected Setup (WPS) specification. In the specification, it is defined that the installation of an AP and the addition of the network application devices are managed by logic entities such as a keygen.

At present, AP devices on the market all support the convenient access of the WPS STA, this causes that the number of user accesses in the same AP device has great limitations. When there are a certain number of STAs needing to establish the same wireless local area network, the requirement for convenient access can not be met.

### Summary

The embodiments of the present invention provide a method and device for establishing a convenient wireless connection, so as to be able to better solve the problem of rapidly and conveniently establishing a wireless connection of a WLAN.

According to one aspect of the embodiment of the present invention, a method for establishing a convenient wireless connection is provided, including:
configuring a first wireless access device to have a wireless station function;
configuring a second wireless access device to have a wireless access point function;
the first wireless access device discovering the second wireless access device by scanning a wireless access point;
the second wireless access device discovering the first wireless access device by scanning a wireless station; and
after the first wireless access device and the second wireless access device respectively discover each other, the first wireless access device and the second wireless access device establishing a wireless connection via negotiation.

In an example embodiment, before the first wireless access device discovering the second wireless access device by scanning the wireless access point, the method further includes: activating the first wireless access device.

In an example embodiment, the first wireless access device scans, within a preset time after being activated, wireless access devices having the wireless access point function on all available wireless channels.

In an example embodiment, the method further includes:
if the first wireless access device scans and discovers multiple wireless access devices having the wireless access point function within the preset time after being activated, the first wireless access device generating information which is used for indicating that multiple convenient wireless connections are not able to be established at the same time, and notifying a user of the information; and
if the first wireless access device does not discover any wireless access device having the wireless access point function within the preset time after being activated, the first wireless access device generating information which is used for indicating that there is no wireless access point for interaction, and notifying the user of the information.

In an example embodiment, before the second wireless access device discovering the first wireless access device by scanning the wireless station, the method further includes: activating the second wireless access device.

In an example embodiment, the second wireless access device scans, within a preset time after being activated, wireless access devices having the wireless station function on all available wireless channels.

In an example embodiment, the method further includes:
if the second wireless access device scans and discovers multiple wireless access devices having the wireless station function within the preset time after being activated, the second wireless access device generating information which is used for indicating that multiple convenient wireless connections are not able to be established at the same time, and notifying the user of the information; and
if the second wireless access device does not discover any wireless access device having the wireless station function within the preset time after being activated, the second wireless access device generating information which is used for indicating that there is no wireless access point for interaction, and notifying the user of the information.

In an example embodiment, the second wireless access device is reconfigured to have the wireless station function, and connect to other wireless access device having the wireless access point function.

According to another aspect of the embodiment of the present invention, a device for establishing a convenient wireless connection is provided, including:
a configuration unit which is adapted to configure a first wireless access device to have a wireless station function, and configure a second wireless access device to have a wireless access point function;
a scanning unit which is adapted to discover the second wireless access point by scanning a wireless access point, and discover the first wireless access device by scanning a wireless station; and
a connection unit which is adapted to establish, after the first wireless access device and the second wireless access device are respectively discovered, a wireless connection between the first wireless access device and the second wireless access device via negotiation

In an example embodiment, the device further includes:
an activation unit which is adapted to activate the first wireless access point before the second wireless access device is discovered by scanning the wireless access point; and activate the second wireless access device before the first wireless access device is discovered by scanning the wireless station.

Comparing with the related art, the embodiments of the present invention have the following beneficial effects.

The embodiments of the present invention enable the user to conveniently, rapidly, and effectively accomplish the establishment of the WLAN security system. At the same time, the embodiments enlarge the coverage range of the wireless signals, and ensure the quality of the wireless connection, thus achieving the effects of optimizing the network layout and improving the user experience.

### Brief Description of the Drawings

Fig. 1 is a diagram showing the principle of the method for establishing a convenient wireless connection provided in an embodiment of the present invention;
Fig. 2 is a working flowchart of the device for establishing a convenient wireless connection provided in an embodiment of the present invention;
Fig. 3 is a schematic structural diagram of a wireless access device provided in an embodiment of the present invention.
Fig. 4 is a schematic diagram showing the secure and convenient wireless connection provided in an embodiment of the present invention.

### Detailed Description of the Embodiments

The example embodiments of the present invention are further illustrated hereinafter in conjunction with the drawings. It should be understood that the embodiments described herein are just to illustrate and explain, rather than limit the present invention.

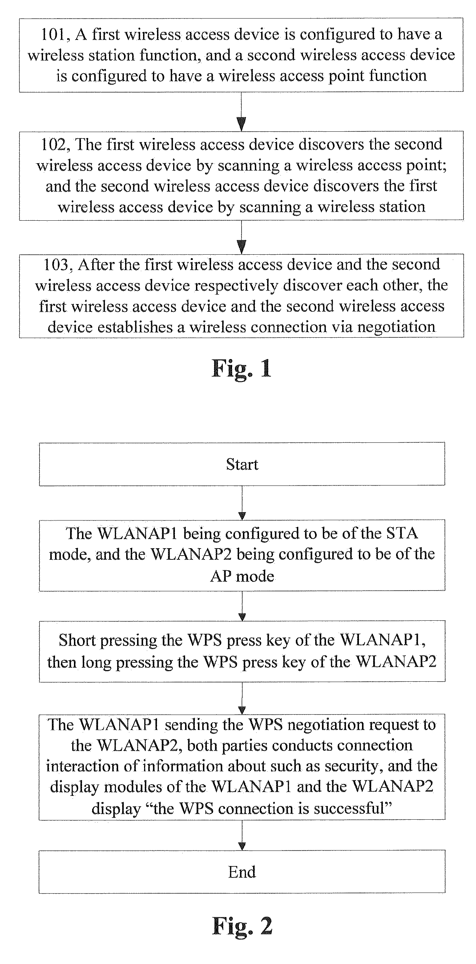

Fig. 1 is a diagram showing the principle of the method for establishing a convenient wireless connection provided in an embodiment of the present invention. As shown in Fig.1, the method include steps described as follows.

In Step 101, a first wireless access device is configured to have a wireless station function, and a second wireless access device is configured to have a wireless access point function.

In Step 102, the first wireless access device discovers the second wireless access device by scanning a wireless access point; and the second wireless access device discovers the first wireless access device by scanning a wireless station.

Before the first wireless access device discovers the second wireless access device by scanning the wireless access point, the first wireless access device is activated. Then, the first wireless access device scans, within a preset time after being activated, wireless access devices having the wireless access point function on all available wireless channels. If the first wireless access device does not discover any wireless access device having the wireless access point function within the preset time after being activated, the first wireless access device generates information which is used for indicating that there is no wireless access point for interaction, and notifying the user of the information. If the first wireless access device discovers one wireless access device having the wireless access point function within the preset time after being activated, the first wireless access device negotiates with the wireless access device and establishes a convenient wireless connection, such as the second wireless access device as described in the present embodiment. If the first wireless access device scans and discovers multiple wireless access devices having the wireless access point function within the preset time after being activated, the first wireless access device generates information which is used for indicating that multiple convenient wireless connections are not able to be established at the same time, and notifies a user of the information.

Before the second wireless access device discovers the first wireless access device by scanning the wireless station, the second wireless access device is activated. Then, the second wireless access device scans, within a preset time after being activated, wireless access devices having the wireless station function on all available wireless channels. If the second wireless access device does not discover any wireless access device having the wireless station function within the preset time after being activated, the second wireless access device generates information which is used for indicating that there is no wireless access point for interaction, and notifying the user of the information. If the second wireless access device discovers one wireless access device having the wireless station function within the preset time after being activated, the second wireless access device negotiates with the wireless access device and establishes a convenient wireless connection, such as the first wireless access device as described in the present embodiment. If the second wireless access device scans and discovers multiple wireless access devices having the wireless station function within the preset time after being activated, the second wireless access device generates information which is used for indicating that multiple convenient wireless connections are not able to be established at the same time, and notifies the user of the information.

In Step 103, after the first wireless access device and the second wireless access device respectively discover each other, the first wireless access device and the second wireless access device establishes a wireless connection via negotiation. After connection accomplishment, the first wireless access device and the second wireless access device are enabled to respectively serve as the wireless access points to establish a conveniently-accessed wireless local area network for a large number of users.

The second wireless access device is reconfigured to have the wireless station function, and connect to other wireless access device having the wireless access point function.

An embodiment of the present invention also provides a device for establishing a convenient wireless connection. The device includes:
a configuration unit which is adapted to configure a first wireless access device to have a wireless station function, and configure a second wireless access device to have a wireless access point function;
an activation unit which is adapted to activate the first wireless access point before the second wireless access device is discovered by scanning a wireless access point; and activate the second wireless access device before the first wireless access device is discovered by scanning a wireless station;
a scanning unit which is adapted to discover the second wireless access point by scanning the wireless access point, and discover the first wireless access device by scanning the wireless station; and
a connection unit which is adapted to establish, after the first wireless access device and the second wireless access device are respectively discovered, a wireless connection between the first wireless access device and the second wireless access device via negotiation.

Fig. 2 is a working flowchart of the device for establishing a convenient wireless connection provided in an embodiment of the present invention. As shown in Fig.2, the working flow includes steps described as follows.

In Step 201, a configuration unit of a wireless access device WLANAP1 is used to configure the WLANAP1 to be of an STA mode, after the configuration, the WLANAP1 not only has the wireless station function (i.e. the STA function), but also has the wireless access point function (i.e. the AP function). A configuration unit of a wireless access device WLANAP2 is used to configure the WLANAP2 to be of an AP mode, and the WLANAP2 has the AP function.

In Step 202, the WPS function of the WLANAP1 serving as the STA device is activated by short pressing (e.g., within three seconds) a WPS press key on the activation unit of the WLANAP1. The WPS function of the WLANAP2 serving as the AP is activated by long pressing the WPS press key on the activation unit of the WLANAP2.

In Step 203, after the WLANAP1 is activated, the scanning unit thereof searches wireless access devices which support the WPS PBC function and have the AP function on all available wireless channels within a predetermined time (e.g., within two minutes), and when the wireless access devices having the AP function are found, the number of the found wireless access devices is determined. If the number is one, i.e. the WLANAP2, the connection unit sends a WPS negotiation request to the WLANAP2, and if both parties are successful in negotiation, a convenient wireless connection between the WLANAP1 and the WLANAP2 is established and the information of "the WPS connection is successful" is displayed. If the number is less than one, that is, equal to zero, the information of "no WPS interaction device" is displayed. If the number is greater than one, the information of "multiple WPS connections can not be established simultaneously" is displayed. After the WLANAP2 is activated, the scanning unit thereof searches wireless access devices which support the WPS PBC function and have the STA function on all available wireless channels within a predetermined time (e.g., within two minutes), and when the wireless access devices having the STA function are found, the number of the found wireless access devices is determined. If the number is one, i.e. the WLANAP1, the connection unit sends a WPS negotiation request to the WLANAP1, and if both parties are successful in negotiation, a convenient wireless connection between the WLANAP1 and the WLANAP2 is established and the information of "the WPS connection is successful" is displayed. If the number is less than one, that is, equal to zero, the information of "no WPS interaction device" is displayed. If the number is greater than one, the information of "multiple WPS connections can not be established simultaneously" is displayed.

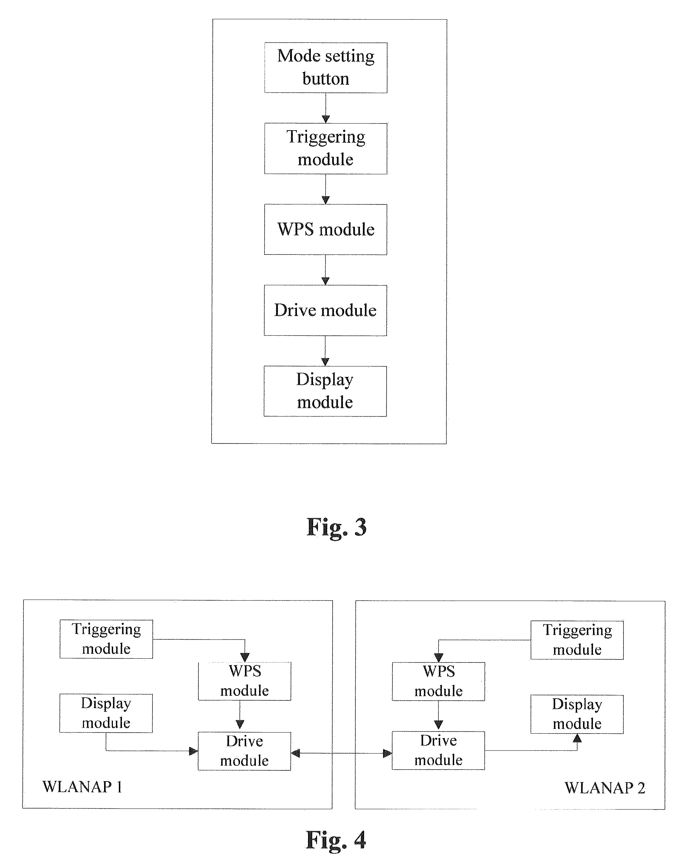

Fig. 3 is a schematic structural diagram of a wireless access device provided in an embodiment of the present invention. As shown in Fig. 3, the wireless access device includes a mode setting button, a triggering module, a WPS module, a drive module and a display module.

The mode setting button implements the function of the configuration unit. The wireless access device as described in the embodiment of the present invention has two modes of AP and STA. When the wireless access device is configured to be of the AP mode via the mode setting button, the wireless access device only has the AP function. When the wireless access device is configured to be of the STA mode via the mode setting button, the wireless access device has the AP function and the STA function simultaneously.

The triggering module and the WPS module implement the function of the activation unit. The triggering module has a button triggering the WPS function. When the wireless access device is in the STA mode, the triggering module has a WPS start press key, when the WPS start press key is long pressed (e.g., more than three seconds), the WPS of the wireless access device serving as the AP is activated; and when the WPS press key is short pressed (within three seconds), the WPS of the wireless access device serving as the STA is activated. The WPS module starts the corresponding WPS function according to the mode setting (the AP mode or the STA mode) of the wireless access device and the operation (long press or short press) of the triggering module.

The drive module implements the functions of the scanning unit and the connection unit. The drive module has not only the capability of searching the WPS connections, but also the drive program of the WPS wireless connection, etc., and can also send the information about the number of the found WLAN clients supporting the WPS PBC access to the display module.

The display module is configured to conduct different operations according to the information about the number of the clients supporting the WPS PBC sent by the drive module. When the number of the clients supporting the WPS PBC is one, "the WPS connection is successful" is displayed. When the number of the clients supporting the WPS PBC is less than one, that is, equal to zero, "no WPS interaction device" is displayed. When the number of the clients supporting the WPS PBC is greater than one, "multiple WPS connections can not be established simultaneously" is displayed.

Fig. 4 is a schematic diagram showing the secure and convenient wireless connection provided in an embodiment of the present invention. As shown in Fig. 4, firstly, the WLANAP1 is configured to be of the STA mode, and the WPS module of the WLANAP1 is triggered by the triggering module of the WLANAP1. The WLANAP2 is configured to be of the AP mode, and the WPS module of the wireless connection terminal WLANAP2 device is triggered by the triggering module of the WLANAP2. Then, after the WLANAP1 is activated, the drive module thereof searches the wireless access devices (i.e. the WLANAPs) which support the WPS PBC function and have the AP function on all available wireless channels within a predetermined time (e.g., within two minutes after the WLANAP1 is activated). When WLANAPs are found, the number thereof is determined. If the number of the WLANAPs is one, that is, the WLANAP2 is found, the drive module of the WLANAP1 sends a WPS negotiation request to the drive module of the WLANAP2, and if both parties are successful in the negotiation, a convenient wireless connection between the WLANAP1 and the WLANAP2 is established and "the WPS connection is successful" is displayed on the display modules of both parties. If the number of the WLANAPs is less than one, that is, equal to zero, the drive module of the WLANAP1 notifies the display module to display "no WPS interaction device". If the number of the WLANAPs is greater than one, the drive module of the WLANAP1 notifies the display module to display "multiple WPS connections can not be established simultaneously". After the WLANAP2 is activated, the drive module thereof searches the WLANAPs which support the WPS PBC function and have the STA function on all available wireless channels within a predetermined time (e.g., within two minutes after the WLANAP1 is activated). When WLANAPs are found, the number thereof is determined. If the number of the WLANAPs is one, that is, the WLANAP1 is found, the drive module of the WLANAP2 sends a WPS negotiation request to the drive module of the WLANAP1, and if both parties are successful in the negotiation, a convenient wireless connection between the WLANAP1 and the WLANAP2 is established and "the WPS connection is successful" is displayed on the display modules of both parties. If the number of the WLANAPs is less than one, that is, equal to zero, the drive module of the WLANAP1 notifies the display module to display "no WPS interaction device". If the number of the WLANAPs is greater than one, the drive module of the WLANAP1 notifies the display module to display "multiple WPS connections can not be established simultaneously".

It can be concluded from the above descriptions that the method for establishing a secure and convenient wireless connection has the following features. The user triggers the WPS module of the wireless connection terminal WLANAP1. The WPS module triggers the drive module of the WLANAP1. The drive module searches the WLANAPs supporting the WPS PBC function on all available wireless channels, and when having found the WLANAPs, sends the informatics about the number of the found WLANAPs to the display module, and conducts corresponding processing according to the number of the found WLANAPs. Specifically, when the number is zero, the display module displays "no WPS interaction device"; when the number is greater than one, the display module displays "multiple WPS connections can not be established simultaneously"; and when the number is equal to one and the negotiation succeeds, the display module displays "the WPS connection is successful". The WLANAPs having the STA function can trigger, according to the requirements of the user, to search the WLANAPs which support the WPS PBC function and have the AP function on all available wireless channels; after the searching is completed, the information about the number of the found WLANAPs is sent to the display module thereof, and the display module thereof displays correspondingly according to the number of the found WLANAPs. If the number of the found WLANAPs is one, the WPS negotiation request is sent to the WLANAP, and if the negotiation succeeds, a secure connection is established. The WLANAPs having the AP function can trigger, according to the requirements of the user, to search the WLANAPs (i.e. the WLANSTA terminal devices) which support the WPS PBC function and have the STA function on all available wireless channels; after searching, the information about the number of the found WLANAPs is sent to the display module thereof, and the display module thereof displays correspondingly according to the number of the found WLANAPs, and if the number of the found WLANAPs is one, the WPS negotiation request is sent to the WLANAP, and if the negotiation succeeds, a secure connection is established.

Furthermore, when many users access the WLAN and the users are widely separated, if the WLANAP1 and the WLANAP2 are connected successfully, the WLANAP2 may be configured to be of the STA mode, so that the WLANAP2 serves as the STA, which gets connected to the WLANAP3 configured to be of the AP mode, thereby furthermore expanding the application scope of the WLAN wireless access devices.

In summary, the embodiments of the present invention have the following technical effects:
1. in the embodiments of the present invention, the mutual connection between the wireless access devices is implemented by means of the WPS convenient access, thereby simplifying the interconnection between the networks, and helping the user to conduct networking;
2. in the embodiments of the present invention, the interconnection between the wireless access devices is implemented, and the signal coverage range of the wireless access devices is also enlarged, thereby optimizing the wireless connection local area network.

Although the embodiments of the present invention are described in detail above, the present invention is not limited thereto, and various modifications can be made by those skilled in the art according to the principles of present invention. Therefore, any modification made according to the principles of present invention is to be understood as falling within the protection scope defined by the claims of the present invention.

### Industrial Applicability

The technical solution provided by the embodiment of the present invention can be applied to the wireless network field, and can enable the user to conveniently, rapidly, and effectively accomplish the establishment of the WLAN security system, and enlarges the coverage range of the wireless signals, ensures the quality of the wireless connection, thus achieving the effects of optimizing the network layout and improving the user experience.

## Claims

1. A method for establishing a convenient wireless connection, **characterized by** comprising:
configuring a first wireless access device to have a wireless station function;
configuring a second wireless access device to have a wireless access point function;
the first wireless access device discovering the second wireless access device by scanning a wireless access point;
the second wireless access device discovering the first wireless access device by scanning a wireless station; and
after the first wireless access device and the second wireless access device respectively discover each other, the first wireless access device and the second wireless access device establishing a wireless connection via negotiation.

2. The method according to claim 1, **characterized in that** before the first wireless access device discovering the second wireless access device by scanning the wireless access point, the method further comprises: activating the first wireless access device.

3. The method according to claim 2, **characterized in that** the first wireless access device scans, within a preset time after being activated, wireless access devices having the wireless access point function on all available wireless channels.

4. The method according to claim 3, **characterized in that** the method further comprises:
if the first wireless access device scans and discovers multiple wireless access devices having the wireless access point function within the preset time after being activated, the first wireless access device generating information which is used for indicating that multiple convenient wireless connections are not able to be established at the same time, and notifying a user of the information;
if the first wireless access device does not discover any wireless access device having the wireless access point function within the preset time after being activated, the first wireless access device generating information which is used for indicating that there is no wireless access point for interaction, and notifying the user of the information.

5. The method according to claim 1, **characterized in that** before the second wireless access device discovering the first wireless access device by scanning the wireless station, the method further comprises: activating the second wireless access device.

6. The method according to claim 5, **characterized in that** the second wireless access device scans, within a preset time after being activated, wireless access devices having the wireless station function on all available wireless channels.

7. The method according to claim 6, **characterized in that** the method further comprises:
if the second wireless access device scans and discovers multiple wireless access devices having the wireless station function within the preset time after being activated, the second wireless access device generating information which is used for indicating that multiple convenient wireless connections are not able to be established at the same time, and notifying the user of the information;
if the second wireless access device does not discover any wireless access device having the wireless station function within the preset time after being activated, the second wireless access device generating information which is used for indicating that there is no wireless access point for interaction, and notifying the user of the information.

8. The method according to any one of claims 1-7, **characterized in that** the second wireless access device is reconfigured to have the wireless station function, and connect to other wireless access device having the wireless access point function.

9. A device for establishing a convenient wireless connection, **characterized by** comprising:
a configuration unit which is adapted to configure a first wireless access device to have a wireless station function, and configure a second wireless access device to have a wireless access point function;
a scanning unit which is adapted to discover the second wireless access point by scanning a wireless access point, and discover the first wireless access device by scanning a wireless station; and
a connection unit which is adapted to establish, after the first wireless access device and the second wireless access device are respectively discovered, a wireless connection between the first wireless access device and the second wireless access device via negotiation.

10. The device according to claim 9, **characterized in that** the device further comprises:
an activation unit which is adapted to activate the first wireless access point before the second wireless access device is discovered by scanning the wireless access point; and activate the second wireless access device before the first wireless access device is discovered by scanning the wireless station.
